# EUROPÄISCHE PATENTSCHRIFT

(11) **EP 0 988 958 B1**
(45) Veröffentlichungstag und Bekanntmachung des Hinweises auf die Patenterteilung: **29.05.2002**
(21) Anmeldenummer: 99118714.7
(22) Anmeldetag: 22.09.1999
(51) Int. Cl.: B29C 65/02, A61J 1/00, A61J 1/05

(54) **Verfahren und Vorrichtung zum Verschweissen einer Folie**
Process and apparatus for welding a film
Procédé et appareil pour le soudage d'une feuille

(30) Priorität: 22.09.1998 DE 19843481
(43) Veröffentlichungstag der Anmeldung: 29.03.2000
(73) Patentinhaber: Fresenius Medical Care Deutschland GmbH, 61352 Bad Homburg v.d.H. (DE)
(72) Erfinder: Meisinger, Matthias, 66583 Spiesen (DE); Leonhard, Jürgen, 66625 Nohfelden (DE)
(74) Vertreter: Laufhütte, Dieter, Dr.-Ing.

(56) Entgegenhaltungen:
- EP-A- 0 606 526
- EP-A- 0 820 854
- US-A- 4 023 607

## Beschreibung

Die vorliegende Erfindung betrifft ein Verfahren zum Verschweißen einer Folie mit einem Grundkörper, insbesondere mit einem Kunststofformteil, bei dem die zu verschweißende Folie zwischen einer Schweißeinheit und dem Grundkörper plaziert wird und bei dem anschließend die Schweißeinheit und/oder der Grundkörper zum Zwecke der Verschweißung derart bewegt werden, daß die Folie auf ihrer einen Seite mit der vorgesehenen Verbindungsfläche des Grundkörpers und auf ihrer anderen Seite mit der Schweißeinheit in Verbindung steht, wobei die Folie mit der vorgesehenen Verbindungsfläche des Grundkörpers verschweißt wird. Die vorliegende Erfindung betrifft ferner eine Vorrichtung zum Verschweißen einer Folie.

Ein derartiges Schweißverfahren wird bei der Fertigung von Wegwerfprodukten angewendet. Dabei wird ein Grundkörper, beispielsweise ein starres Formteil, mit einer Folie verschweißt, wobei die Folie bestimmte, beispielsweise von der späteren Verwendung abhängende Eigenschaften aufweist. Vorbekannte Verfahren wie beispielsweise aus der DE 40 05 441 bekannt, sehen vor, zunächst die Folie an einer gewünschten Position zwischen Schweißeinheit und Grundkörper zu plazieren und anschließend die Schweißeinheit derart zu bewegen, daß die Folie mit der Schweißeinheit einerseits und mit dem Grundkörper andererseits in Verbindung steht und entsprechend mit der vorgesehenen Verbindungsfläche des Grundkörpers verschweißt wird. Werden Folien mit einem sehr niedrigen Schmelzpunkt verwendet, ergibt sich das Problem, daß die Toleranzen bei der Fertigung des Grundkörpers sowie auch bei der Bewegung der Schweißeinheit sehr genau eingehalten werden müssen, damit es zu einem definierten Schweißverhalten kommt. Bekannte Verfahren erfüllen diese Anforderungen nur unzureichend bzw. benötigen aufgrund ihrer Konstruktionsmerkmale wesentlich mehr Schweißfläche. Können die Formtoleranzen und die Gestaltabweichungen nicht innerhalb der gewünschten Grenzen gehalten werden, was beispielsweise bei Grundkörpem der Fall sein kann, die aus Spritzgußteilen bestehen, kann es sehr leicht zu einer unerwünschten Durchtrennung der Folie kommen.

EP 0 820 854 beschreibt ein Werkzeug zum gasdichten Verbinden des Innenbeutels einer Aerosoldose mit dem Ventilhalter.

Problematisch ist auch das Einschweißen eines Grundkörpers zwischen zwei Folien, wie beispielsweise eines Schlauches zwischen die Randnaht eines medizinischen Folienbeutels. Hier kann es bei herkömmlichen Produktionsverfahren bei der Einformung im Schweißwerkzeug zur Verstreckung der Folien und damit zu Ausdünnungen kommen, die zu Undichtigkeiten bei Belastung des Beutels führen.

Der vorliegenden Aufgabe liegt daher die Erfindung zugrunde, verbesserte Verfahren und Vorrichtungen zum Verschweißen einer Folie mit einem Grundkörper anzugeben, die die aus dem Stand der Technik bekannten Nachteile vermeiden. Insbesondere soll es auch bei Verwendung dünner Folien beim Schweißvorgang nicht zur Durchtrennung der Folie kommen, eine Ausdünnung im Bereich der Schweißnaht und damit entstehende Undichtigkeiten sollen verhindert werden.

Diese Aufgabe wird ausgehend von einem gattungsgemäßen Verfahren erfindungsgemäß dadurch gelöst, daß vor der Plazierung der Folie zwischen Schweißeinheit und Grundkörper zum Zwecke der Vorverformung des Grundkörpers in dessen Verbindungsfläche die Form der Schweißeinheit eingeschmolzen wird. Durch das Einschmelzen der Form der Schweißeinheit in den Grundkörper wird die Kontur der Schweißeinheit in der Verbindungsfläche des Grundkörpers komplementär abgebildet. Damit wird vor dem Verschweißen der Folie dem Grundkörper ein Kontur gegeben, die einerseits einen definierten Abstand zur Schweißeinheit aufweist und andererseits mit einer glatten Oberfläche versehen ist, d.h. keine fertigungsbedingten Unebenheiten aufweist.

Im Anschluß an die erfindungsgemäße Vorverformung des Grundkörpers wird die zu verschweißende Folie zwischen der Schweißeinheit und dem Grundkörper bzw. der vorgesehenen und vorverformten Verbindungsfläche des Grundkörpers plaziert und anschließend mit dieser verschweißt. Daraus ergibt sich der Vorteil, daß die Geometrie und Beabstandung der vorverformten Verbindungsfläche und damit auch der darauf aufliegenden Folie exakt bekannt und definiert sind, wodurch ein Durchtrennen der Folie wirksam verhindert wird. Insbesondere ergibt sich daraus in einer laufenden Produktion ein gleichbleibendes Qualitätsniveau unabhängig von üblicherweise auftretenden Formtoleranzen und Gestaltabweichungen der beispielsweise als Spritzgußteile ausgeführten Grundkörper. Weitere Vorteile des erfindungsgemäßen Verfahrens ergeben sich daraus, daß Ausdünnungen der Folie verhindert sind und die Schweißnähte eine hohe Belastbarkeit aufweisen sowie aufgrund des Ausgleiches von Bauteiltoleranzen und Unebenheiten von Schweißeinheit und Grundkörper gleichmäßig tragend ausgeführt sind. Femer wird aufgrund der exakten Geometrie der Verbindungsfläche ein nur geringer Platzbedarf benötigt. Beispielsweise kann die Schweißnaht auf einem 1 mm breiten Steg aufgebracht werden.

In Weiterbildung der Erfindung werden bei der Vorverformung des Grundkörpers die Schweißeinheit und/oder der Grundkörper relativ zueinander derart bewegt, daß die Schweißeinheit in die Verbindungsfläche des Grundkörpers eindringt. Die Form der Schweißeinheit wird auf den Grundkörper also unmittelbar von der Schweißeinheit selbst abgebildet, indem diese selbst auf die Verbindungsfläche gefahren wird. Um schnellere Taktzeiten erreichen zu können, kann die Vorverformung des Grundkörpers auch mit einer weiteren Schweißeinheit bewerkstelligt werden, deren Form exakt der Form der für den eigentlichen Schweißvorgang verwendeten Schweißeinheit entspricht. Der vorgeformte Grundkörper wird dann in einem nächsten Takt mit der Folie in der daran anschließenden Schweißeinheit plaziert und mit dieser verschweißt. Die zuvor beschriebene Ausführung, wonach die Vorverformung und das Verschweißen der Folie mit dem Grundkörper von demselben Schweißwerkzeug durchgeführt wird, besitzt demgegenüber den Vorteil, daß der Grundkörper relativ zur Schweißeinheit nur ein einziges Mal positioniert zu werden braucht und keine Formabweichungen zwischen dem Vorverformungsschritt und dem Schweißschritt auftreten können.

Besonders vorteilhaft ist es, wenn die Auslenkung der Schweißeinheit bei der Vorverformung des Grundkörpers die Auslenkung bei der Verschweißung der Folie um einen Betrag übersteigt, der in etwa der Dicke der Folie entspricht. Dadurch wird erreicht, daß eine Ausdünnung des Folienquerschnittes verhindert wird bzw. daß die verbleibenden Wandstärken der Folie nahezu dem Originalquerschnitt entsprechen. Damit wird es auch möglich, die sichere Verschweißung sehr dünner Folien (< 100 µm) zu gewährleisten.

Gemäß einer bevorzugten Ausgestaltung der vorliegenden Erfindung wird bei der Vorverformung des Grundkörpers durch Verwendung einer Schweißeinheit mit kreis- oder teilkreisförmiger Querschnittsfläche eine kreissegmentförmige Vertiefung in dem Grundkörper erzeugt. Die Schweißeinheit kann vorteilhaft einen Schweißdraht aufweisen.

In weiterer Ausgestaltung der vorliegenden Erfindung ist vorgesehen, daß die Schweißeinheit nach einem Wärmeimpulsverfahren beheizt wird.

In Weiterbildung der Erfindung können mit dem Grundkörper zwei Folien von gegenüberliegenden Seiten her verschweißt werden, derart, daß der Grundkörper zwischen den Folien eingeschweißt wird. Es wird eine um den Grundkörper umlaufende Schweißnaht erzeugt. Dort wo die beiden Folien aufeinander treffen, werden die beiden Folien miteinander verschweißt. Jede Folie wird also jeweils halb um den Grundkörper herum geführt und an diesem verschweißt, so daß die Folien seitlich wieder zusammenlaufen und auch miteinander verschweißt werden.

Der Grundkörper wird vorzugsweise zwischen zwei gegenüberliegenden Schweißeinheiten plaziert, die beiden Folien werden jeweils zwischen dem Grundkörper und einer der Schweißeinheiten plaziert und anschließend werden die beiden Schweißeinheiten derart zusammengefahren, daß die beiden Folien jeweils auf ihrer einen Seite mit einer der Schweißeinheiten und mit ihrer anderen Seite mit der vorgesehenen Verbindungsfläche des Grundkörpers in Verbindung stehen, wobei die Folien mit der Verbindungsfläche des Grundkörpers und daran anschließend miteinander verschweißt werden.

Bei der Vorverformung des Grundkörpers wird diesem von gegenüberliegenden Seiten her jeweils die Form der beiden Schweißeinheiten halbschalenartig aufgeprägt, insbesondere eingeschmolzen, wobei vorzugsweise die beiden Schweißeinheiten derart zusammengefahren werden, daß diese von gegenüberliegenden Seiten her in die Verbindungsfläche des Grundkörpers eindringen. Dies kann gegebenenfalls auch in der zuvor beschriebenen Weise von einem separaten, identisch geformten Schweißwerkzeug bewerkstelligt werden. Die Verbindungsfläche wird bei diesem zweiseitigen Verfahren umlaufend geformt.

Vorteilhafterweise kann bei der Vorverformung des Grundkörpers Material desselben zur Seite hin verdrängt und seitliche sich verjüngende Fortsätze ausgebildet werden. Mit Hilfe dieser flügelartigen Fortsätze, die in der Schweißebene der anschließend anzuschweißenden Folien liegen, läuft der zwischen den Folien einzuschweißende Grundkörper im Querschnitt zu gegenüberliegenden Seiten hin sanft aus, d.h. grobe Querschnittsprünge werden abgemildert. Die seitlichen Fortsätze können in Form von Lippen ausgebildet werden und bewirken einen weichen Folienverlauf beim Anschweißen des Grundkörpers an die Folie.

Eine bevorzugte Anwendung des zweiseitigen, sandwichartigen Einschweißens des Grundkörpers zwischen zwei Folien ist insbesondere das Einschweißen eines Einsatzstückes, insbesondere eines Anschlußschlauches, der gegebenenfalls als Lippenschlauch ausgebildet sein kann, in den Rand eines medizinischen Folienbeutels.

Die vorliegende Erfindung betrifft femer eine Vorrichtung zum Verschweißen einer Folie mit einem Grundkörper, wobei die Vorrichtung mindestens eine Schweißeinheit und einen Halter für den Grundkörper aufweist und wobei die Schweißeinheit und/oder der Halter für den Grundkörper derart bewegbar sind, daß die Folie auf ihrer einen Seite mit der vorgesehenen Verbindungsfläche des Grundkörpers und auf ihrer anderen Seite mit der Schweißeinheit in Verbindung steht, wobei die Folie mit der vorgesehenen Verbindungsfläche des Grundkörpers verschweißt wird. Ferner ist erfindungsgemäß eine Steuereinheit vorgesehen, durch die die Bewegung der zumindest einen Schweißeinheit und/oder des Grundkörpers derart gesteuert wird, daß vor der Verschweißung der Folie zum Zwecke der Vorverformung die Form der Schweißeinheit in die vorgesehene Verbindungsfläche des Grundkörpers eingeschmolzen wird.

Gemäß einer bevorzugten Ausgestaltung der vorliegenden Erfindung ist die Steuereinheit derart ausgeführt, daß die Schweißeinheit bei der Vorverformung in den Grundkörper eindringt und um einen Betrag ausgelenkt wird, der die Auslenkung beim Schweißvorgang um in etwa die Dicke der Folie überschreitet.

Es kann eine Eingabeeinheit vorgesehen sein, die mit der Steuereinheit in Verbindung steht und in die die Dicke der Folie eingebbar ist. Durch die Abstimmung der Bewegung der Schweißeinheit und/oder des Grundkörpers auf die Dicke der zu verschweißenden Folie wird eine breite Einsetzbarkeit und unabhängig von der Dicke der Folie stets eine optimale Arbeitsweise der erfindungsgemäßen Vorrichtung gewährleistet.

Besonders vorteilhaft ist es, wenn die Schweißeinheit einen Schweißdraht aufweist. Dieser Schweißdraht kann nach einem an sich bekannten Wärmeimpulsverfahren betrieben werden.

Gemäß einer bevorzugten Ausgestaltung der vorliegenden Erfindung ist vorgesehen, daß der Schweißdraht teilweise in einem Gehäuse aufgenommen ist, wobei zwischen dem Schweißdraht und dem Gehäuse eine Teflonummantelung vorgesehen ist. Der Heizdraht kann ferner wenigstens teilweise mit einer Kaptonfolie überzogen sein.

Zum Einschweißen des Grundkörpers zwischen zwei Folien sind vorzugsweise ein paar jeweils halbschalenförmige Schweißeinheiten vorgesehen, die gegenüberliegend angeordnet und aufeinander zu und voneinander weg fahrbar sind. Die Steuereinheit kann derart ausgebildet sein, daß die beiden Schweißeinheiten bei der Vorverformung zusammengefahren werden und von gegenüberliegenden Seiten vorzugsweise gleichzeitig in den Grundkörper eindringen. Gegebenenfalls könnte die Vorverformung der beiden Seiten auch nacheinander durchgeführt werden. Die gleichzeitige Vorverformung beider Seiten besitzt jedoch Vorteile sowohl hinsichtlich der Formhaltigkeit als auch der Prozeßgeschwindigkeit.

Gemäß einer Ausführung der Erfindung können eine Vor-Schweißeinheit und eine Haupt-Schweißeinheit vorgesehen sein, die identisch geformt sind. Hierdurch kann die Vorverformung durch die Vor-Schweißeinheit durchgeführt werden, während der eigentliche Schweißvorgang, d.h. das Anschweißen der Folie an den Grundkörper von der Haupt-Schweißeinheit bewerkstelligt wird.

Weitere Einzelheiten und Vorteile der vorliegenden Erfindung werden anhand in der Zeichnung dargestellter Ausführungsbeispiele näher erläutert. Es zeigen:
- Fig. 1: eine Querschnittsansicht des Grundkörpers, der Folie sowie der Schweißeiriheit gemäß einer bevorzugten Ausführung der Erfindung,
- Fig. 2: eine Querschnittsansicht ähnlich Fig. 1 einer Schweißvorrichtung gemäß einer weiteren bevorzugten Ausführung der Erfindung, wonach mittels zwei gegenüberliegend angeordneter Schweißeinheiten der Grundkörper zwischen zwei Folien eingeschweißt wird, und
- Fig. 3: eine perspektivische, schematische Ansicht eines mittels der in Fig. 2 gezeigten Vorrichtung zwischen zwei Folien eingeschweißten Schlauchs.

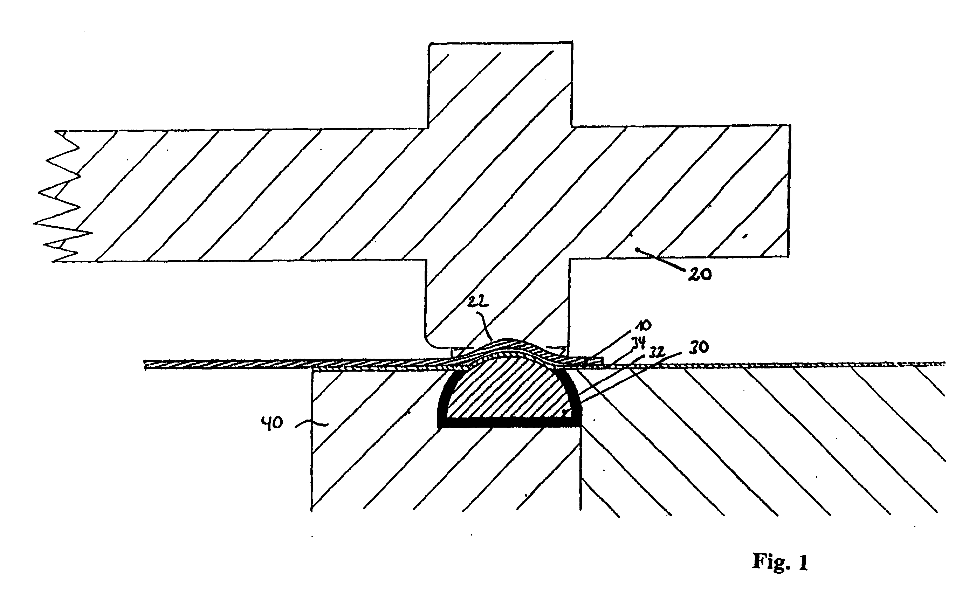

In Fig. 1 ist in einer Querschnittsansicht der Grundkörper 20 dargestellt, der vorzugsweise aus einem Spritzgußformteil besteht. Der Grundkörper 20 wird an seiner Verbindungsfläche 22 mit einer Folie 10 verschweißt.

Die Schweißeinheit umfaßt den Schweißdraht 30, der in dem Gehäuse 40 fixiert ist. Zwischen Gehäuse 40 und dem Schweißdraht 30 ist die Teflonummantelung 32 vorgesehen. Das Gehäuse 40 sowie der aus dem Gehäuse 40 herausragende Teil des Schweißdrahtes 30 ist mit der Kaptonfolie 34 überzogen.

In einem ersten Verfahrensschritt wird der Schweißdraht 30 derart auf den Grundkörper 20 zubewegt, daß der Schweißdraht 30 bzw. die Kaptonbeschichtung 34 in die Verbindungsfläche 22 des Grundkörpers 20 eindringt, ohne daß dabei die Folie 10 zwischen Schweißdraht 30 und Grundkörper 20 angeordnet ist. Durch diese Vorverformung wird eine definierte und glatte Oberfläche im Grundkörper 20 gebildet und der Einfluß von Toleranzen auf das spätere Verschweißen der Folie 10 ausgeschlossen.

Nach dieser Vorverformung wird der Schweißdraht 30 wieder geringfügig vom Grundkörper 20 entfernt, d.h. gemäß Fig. 1 nach unten bewegt, und die Folie 10 an der gewünschten Position plaziert.

Nun wird der Schweißdraht 30 auf die Folie 10 zu bewegt, d.h. gemäß Fig. 1 nach oben geführt, wodurch die Folie 10 zwischen der vorverformten Verbindungsfläche 22 des Grundkörpers 20 und der Oberfläche des Schweißdrahtes 30 bzw. der Kaptonbeschichtung 34 fixiert wird. Dabei wird vorteilhaft der Schweißdraht 30 um einen Betrag nach oben bewegt, der um die Dicke der Folie 10 unter der Auslenkung des Schweißdrahtes 30 bei der Vorverformung des Grundkörpers 20 liegt. Dadurch wird erreicht, daß eine Ausdünnung des Querschnittes der Folie 10 vermieden wird und die verbleibenden Wandstärken nahezu dem Originalquerschnitt der Folie 10 entsprechen.

Der Schweißdraht 30 arbeitet gemäß dem vorliegenden Ausführungsbeispiel nach einem an sich bekannten Wärmeimpulsverfahren. Der Schweißdraht 30 ist konstruktiv derart im Gehäuse 40 geführt, daß er in der Lage ist, horizontale und vertikale Kräfte aufzunehmen, ohne zu verrutschen. Die Möglichkeit der Längenausdehnung während der Wärmung ist gegeben. Dadurch wird erreicht, daß der Schweißdraht 30 stets in einer exakten Position verbleibt, wodurch gewährleistet wird, daß die Positionierung des Heizdrahtes 30 während der Vorverformung und während des Schweißvorganges identisch ist.

Der Grundkörper 20 kann beispielsweise Bestandteil einer Kassette für die Hämodialyse oder eines Cyclers für die Peritonealdialyse sein.

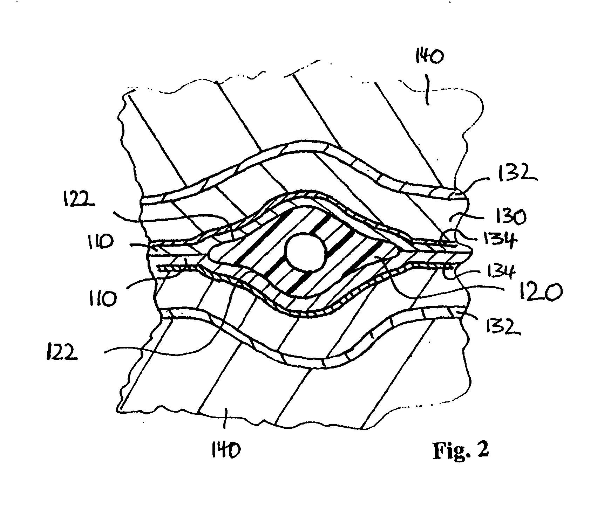

Fig. 2 zeigt eine weitere bevorzugte Ausführung der Erfindung, bei der als Grundkörper ein sogenannter Lippenschlauch 120 in einen medizinischen Folienbeutel, genauer gesagt in dessen Rand eingeschweißt wird. Der Lippenschlauch 120 ist zu gegenüberliegenden Seiten hin ausgedünnt, so daß er - grob gesprochen - einen linsenförmigen Querschnitt besitzt. Von den beiden Flachseiten des Schlauches 120 her werden zwei Folien 110 an diesen angeschweißt. Neben dem Schlauch 120 werden die dort unmittelbar aufeinander liegenden Folien 110 mit sich selbst verschweißt. Bei der Verschweißung kann der Schlauch 120 auf einen nicht näher dargestellten Dorn gesteckt sein, der für diesen einen Halter bildet. Der Schweißvorgang erfolgt grundsätzlich ähnlich dem zuvor beschriebenen einseitigen Verfahren. Im Unterschied zu diesem jedoch sind bei der Ausführung gemäß Fig. 2 zwei gegenüber liegende Schweißeinheiten vorgesehen, von denen jede den zuvor beschriebenen Aufbau der einseitigen Schweißeinheit besitzen kann. Wie Fig. 2 zeigt, besitzt jede Schweißeinheit ein Gehäuse 140 sowie einen Schweißdraht 130, der in das Gehäuse 140 eingebettet ist, wobei eine Teflonummantelung 132 dazwischen angeordnet ist. Der Schweißdraht 130 ist ebenfalls wie zuvor beschrieben mit einer Kaptonfolie 134 überzogen.

Vor der eigentlichen Verschweißung wird der Schlauch 120 ohne die Folien 110 zwischen den beide Schweißeinheiten 130, 140 plaziert. In einem ersten Verfahrensschritt werden die gegenüberliegenden Schweißdrähte zusammengefahren, so daß sie von beiden Seiten her in den dazwischen liegenden Grundkörper 120 eindringen und ihre Form in dessen Verbindungsfläche 122 einschmelzen. Durch diese Vorverformung erhält der Schlauch 120 eine definierte und glatte Oberfläche und wird entsprechend der von den halbschalenförmigen Schweißeinheiten vorgegebenen Kontur geformt Hierdurch wird der Einfluß von ursprünglich vorhandenen Toleranzen auf das spätere Verschweißen mit den Folien 110 ausgeschlossen.

Nach dieser Vorverformung werden die beiden Schweißeinheiten 130, 140 wieder geringfügig auseinander gefahren und die Folien 110 in der in Fig. 2 gezeigten Weise plaziert.

Im nächsten Verfahrensschritt werden die Schweißzangen wieder zusammen gefahren, wodurch die beiden Folien 110 zwischen dem vorgeformten Schlauch 120 und den jeweiligen Oberflächen der Schweißdrähte 130 bzw. deren Kaptonbeschichtungen 134 fixiert wird. Dabei werden die Schweißdrähte 130 um einen Betrag zusammengefahren, der um die Summe der Dicken der Folien 110 unter der Auslenkung der Schweißdrähte 130 bein Zusammenfahren für die Vorverformung des Schlauches 120 liegt. Hierdurch wird eine Ausdünnung der Querschnitte der Folien 110 vermieden und die verbleibenden Wandstärken entsprechen nahezu dem Originalquerschnitt der Folien.

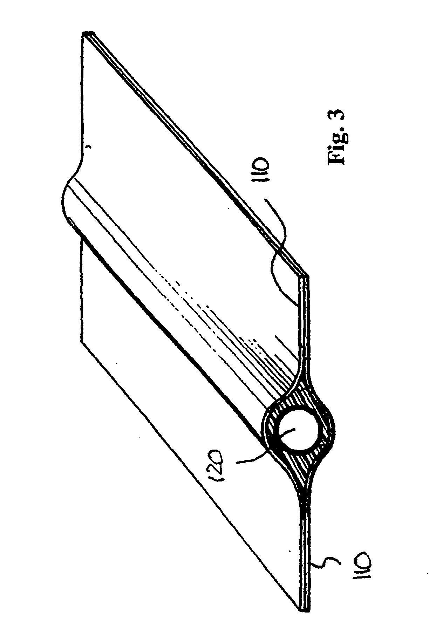

Fig. 3 zeigt den fertig eingeschweißten Schlauch. Dies kann insbesondere der Anschlußschlauch eines medizinischen Folienbeutels sein.

## Patentansprüche

1. Verfahren zum Verschweißen einer Folie (10; 110) mit einem Grundkörper (20; 120), insbesondere mit einem Kunststofformteil, bei dem die zu verschweißende Folie (10; 110) zwischen einer Schweißeinheit und dem Grundkörper (20; 120) plaziert wird und bei dem anschließend die Schweißeinheit und/oder der Grundkörper (20; 120) zum Zwecke der Verschweißung derart bewegt werden, daß die Folie (10; 110) auf ihrer einen Seite mit der vorgesehenen Verbindungsfläche (22; 122) des Grundkörpers (20; 120) und auf ihrer anderen Seite mit der Schweißeinheit in Verbindung steht, wobei die Folie (10; 110) mit der vorgesehenen Verbindungsfläche (22; 122) des Grundkörpers (20; 120) verschweißt wird,
**dadurch gekennzeichnet,**
**daß** vor der Plazierung der Folie (10; 110) zwischen Schweißeinheit und Grundkörper zum Zwecke der Vorverformung des Grundkörpers (20; 120) in dessen Verbindungsfläche die Form der Schweißeinheit eingeschmolzen wird.

2. Verfahren nach Anspruch 1, **dadurch gekennzeichnet, daß** die Schweißeinheit (30, 40; 130, 140) und der Grundkörper (20; 120) bei der Vorverformung des Grundkörpers (20; 120) relativ zueinander derart bewegt werden, daß die Schweißeinheit in die vorgesehene Verbindungsfläche (22; 122) des Grundkörpers (20; 120) eindringt, wobei die Auslenkung der Schweißeinheit bei der Vorverformung des Grundkörpers (20; 120) die Auslenkung bei der Verschweißung der Folie (10; 110) um einen Betrag übersteigt, der in etwa der Dicke der Folie (10; 110) entspricht.

3. Verfahren nach einem der vorhergehenden Ansprüche, **dadurch gekennzeichnet, daß** die Schweißeinheit nach einem Wärmeimpulsverfahren beheizt wird.

4. Verfahren nach einem der vorhergehenden Ansprüche, wobei zwei Folien (110) mit dem Grundkörper (120) von gegenüberliegenden Seiten her verschweißt werden, derart, daß der Grundkörper zwischen den Folien eingeschweißt wird.

5. Verfahren nach dem vorhergehenden Anspruch, wobei der Grundkörper (120) zwischen zwei gegenüberliegenden Schweißeinheiten (130, 140) plaziert wird, die beiden Folien (110) jeweils zwischen dem Grundkörper und einer der Schweißeinheiten plaziert werden und anschließend die beiden Schweißeinheiten zusammengefahren werden, derart, daß die beiden Folien (110) jeweils auf ihrer einen Seite mit einer der Schweißeinheiten und mit ihrer jeweils anderen Seite mit der vorgesehenen Verbindungsfläche (122) des Grundkörpers (120) in Verbindung stehen, wobei die Folien mit der Verbindungsfläche des Grundkörpers verschweißt werden.

6. Verfahren nach einem der beiden vorhergehenden Ansprüche, wobei bei der Vorverformung des Grundkörpers (120) diesem von gegenüberliegenden Seiten her jeweils die Form der beiden Schweißeinheiten aufgeprägt, insbesondere eingeschmolzen wird, wobei vorzugsweise die beiden Schweißeinheiten (130, 140) derart zusammengefahren werden, daß die Schweißeinheiten von gegenüberliegenden Seiten des Grundkörpers her in dessen Verbindungsfläche (122) eindringen.

7. Verfahren nach einem der vorhergehenden Ansprüche, wobei als Grundkörper ein Einsatzstück (120), insbesondere ein Schlauch, zwischen zwei Folien (110) eines medizinischen Folienbeutels eingeschweißt wird.

8. Vorrichtung zum Verschweißen einer Folie (10; 110) mit einem Grundkörper (20; 120) mit zumindest einer Schweißeinheit (130, 140) und einem Halter für den Grundkörper (20; 120), wobei die Schweißeinheit und/oder der Halter derart bewegbar sind, daß die Folie (10; 110) auf ihrer einen Seite mit der vorgesehenen Verbindungsfläche (122; 22) des Grundkörpers (20; 120) und auf ihrer anderen Seite mit der Schweißeinheit in Verbindung steht, wobei die Folie (10; 110) mit der vorgesehenen Verbindungsfläche (22; 122) des Grundkörpers (20; 120) verschweißt wird,
**dadurch gekennzeichnet,**
**daß** eine Steuereinheit vorgesehen ist, durch die die Bewegung der zumindest einen Schweißeinheit und/oder des Grundkörpers (20; 120) derart gesteuert wird, daß vor der Verschweißung der Folie (10; 110) zum Zwecke der Vorverformung des Grundkörpers die Form der Schweißeinheit in die vorgesehene Verbindungsfläche (22; 122) des Grundkörpers (20; 120) eingeschmolzen wird.

9. Vorrichtung nach Anspruch 9, **dadurch gekennzeichnet, daß** die Steuereinheit derart ausgeführt ist, daß die Schweißeinheit bei der Vorverformung in den Grundkörper (20; 120) eindringt und um einen Betrag ausgelenkt wird, der die Auslenkung beim Schweißvorgang um in etwa die Dicke der Folie (10; 110) überschreitet.

10. Vorrichtung nach einem der vorhergehenden Ansprüche, **dadurch gekennzeichnet, daß** eine Eingabeeinheit vorgesehen ist, die mit der Steuereinheit in Verbindung steht, und in die die Dicke der Folie (10; 110) eingebbar ist.

11. Vorrichtung nach einem der vorhergehenden Ansprüche, **dadurch gekennzeichnet, daß** die Schweißeinheit einen Schweißdraht (30; 130) aufweist.

12. Vorrichtung nach Anspruch 11, **dadurch gekennzeichnet, daß** der Schweißdraht (30; 130) teilweise in einem Gehäuse (40; 140) aufgenommen ist, wobei zwischen dem Schweißdraht (30; 130) und dem Gehäuse (40; 140) eine Teflonummantelung (32; 132) vorgesehen ist.

13. Vorrichtung nach Anspruch 11 oder 12, **dadurch gekennzeichnet, daß** der Schweißdraht (30; 130) wenigstens teilweise mit einer Kaptonfolie (34; 134) überzogen ist.

14. Vorrichtung nach einem der vorhergehenden Ansprüche, wobei ein Paar insbesondere jeweils halbschalenförmige Schweißeinheiten (130, 140) gegenüberliegend angeordnet und aufeinander zu und auseinander fahrbar gelagert sind, sowie die Steuereinrichtung derart ausgebildet ist, daß die beiden Schweißeinheiten (130, 140) bei der Vorverformung des Grundkörpers (120) zusammengefahren werden und von gegenüberliegenden Seiten her in den Grundkörper eindringen.

15. Vorrichtung nach einem der vorhergehenden Ansprüche, wobei eine Vor-Schweißeinheit und eine Haupt- Schweißeinheit, die identisch geformt sind, vorgesehen sind und die Steuereinrichtung derart ausgebildet ist, daß zur Vorverformung des Grundkörpers (20; 120) die Vor-Schweißeinheit und der Halter derart zusammenbewegt werden, daß die Vor-Schweißeinheit in die vorgesehene Verbindungsfläche (22; 122) des Grundkörpers (20, 120) eindringt und zur Verschweißung die Haupt-Schweißeinheit und der Halter derart zusammenbewegt werden, daß die Folie (10, 110) auf ihrer einen Seite mit der vorgesehenen Verbindungsfläche (22, 122) des Grundkörpers (20; 120) und auf ihrer anderen Seite mit der Haupt-Schweißeinheit in Verbindung steht, wobei die Folie (10; 110) mit der vorgesehenen Verbindungsfläche (22; 122) des Grundkörpers verschweißt wird.

16. Vorrichtung nach den beiden vorhergehenden Ansprüchen, wobei ein paar Vor-Schweißeinheiten und ein paar Haupt-Schweißeinheiten vorgesehen sind.

## Claims

1. Method for welding a film (10; 110) to a basic body (20; 120), in particular to a plastic moulding, in which the film (10; 110) to be welded is placed between a welding unit and the basic body (20; 120), and in which the welding unit and/or the basic body (20; 120) is subsequently moved for welding purposes, in such a way that the film (10; 110) is connected on one side to the intended connecting surface (22; 122) of the basic body (20; 120) and on its other side to the welding unit, the film (10; 110) being welded to the intended connecting surface (22; 122) of the basic body (20; 120), **characterized in that**, before the film (10; 110) is placed between the welding unit and the basic body, the shape of the welding unit is fused into the connecting surface of the basic body (20; 120) for the purpose of preforming the latter.

2. Method according to Claim 1, **characterized in that**, during the preforming of a basic body (20; 120), the welding unit (30, 40; 130, 140) and the basic body (20; 120) are moved relative to one another in such a way that the welding unit penetrates into the intended connecting surface (22; 122) of the basic body (20; 120), a deflection of the welding unit during the preforming of the basic body (20; 120) exceeding the deflection during the welding of the film (10; 110) by an amount which corresponds approximately to the thickness of the film (10; 110).

3. Method according to one of the preceding claims, **characterized in that** the welding unit is heated by a heat-pulse method.

4. Method according to one of the preceding claims, two films (110) being welded to the basic body (120) from opposite sides, in such a way that the basic body is welded in between the films.

5. Method according to the preceding claim, the basic body (120) being placed between two opposite welding units (130, 140), the two films (110) being placed in each case between the basic body and one of the welding units, and the two welding units subsequently being moved together, in such a way that the two films (110) are in each case connected on one side to one of the welding units and on their other side in each case to the intended connecting surface (122) of the basic body (120), the films being welded to the connecting surface of the basic body.

6. Method according to one of the two preceding claims, in each case the shape of the welding units being imprinted on, in particular fused in, the basic body (120) from opposite sides during the preforming of the latter, preferably the two welding units (130, 140) being moved together in such a way that the welding units penetrate into the connecting surface (122) of the basic body from opposite sides of the latter.

7. Method according to one of the preceding claims, an insert piece (120), in particular a tube, being welded in, as a basic body, between two films (110) of a medical film bag.

8. Device for welding a film (10; 110) to a basic body (20; 120), with at least one welding unit (130, 140) and with a holder for the basic body (20; 120), the welding unit and/or the holder being movable in such a way that the film (10; 110) is connected on one side to the intended connecting surface (122, 22) of the basic body (20; 120) and on its other side to the welding unit, the film (10; 110) being welded to the intended connecting surface (22; 122) of the basic body (20; 120), **characterized in that** a control unit is provided, by means of which the movement of the at least one welding unit and/or of the basic body (20; 120) is controlled in such a way that, before the welding of the film (10; 110), the shape of the welding unit is fused into the intended connecting surface (22; 122) of the basic body (20; 120) for the purpose of preforming the basic body.

9. Device according to Claim 8, **characterized in that** the control unit is designed in such a way that, during preforming, the welding unit penetrates into the basic body (20; 120) and is deflected by an amount which exceeds the deflection during the, welding operation by approximately the thickness of the film (10; 110).

10. Device according to one of the preceding claims, **characterized in that** an input unit is provided, which is connected to the control unit and into which the thickness of the film (10; 110) can be input.

11. Device according to one of the preceding claims, **characterized in that** the welding unit has a welding wire (30; 130).

12. Device according to Claim 11, **characterized in that** the welding wire (30; 130) is received partially in a housing (40; 140), a Teflon casing (32; 132) being provided between the welding wire (30; 130) and the housing (40; 140).

13. Device according to Claim 11 or 12, **characterized in that** the welding wire (30; 130) is covered at least partially with a Kapton film (34; 134).

14. Device according to one of the preceding claims, a pair of, in particular, in each case half-shell-shaped welding units (130, 140) being arranged opposite one another and being mounted so as to be movable towards and apart from one another, and the control means being designed in such a way that, during the preforming of the basic body (120), the two welding units (130, 140) are moved together and penetrate into the basic body from opposite sides.

15. Device according to one of the preceding claims, a pre-welding unit and a main welding unit, which are shaped identically, being provided, and the control means being designed in such a way that, for the preforming of the basic body (20; 120), the pre-welding unit and the holder are moved together in such a way that the pre-welding unit penetrates into the intended connecting surface (22; 122) of the basic body (20, 120), and, for welding, the main welding unit and the holder are moved together in such a way that the film (10, 110) is connected on one side to the intended connecting surface (22; 122) of the basic body (20; 120) and on its other side to the main welding unit, the film (10; 110) being welded to the intended connecting surface (22; 122) of the basic body.

16. Device according to the two preceding claims, a pair of pre-welding units and a pair of main welding units being provided.

## Revendications

1. Procédé pour le soudage d'une feuille (10 ; 110) avec un corps de base (20 ; 120), notamment avec une pièce en matière synthétique, où la feuille souder (10 ; 110) est placée entre une unité de soudage et le corps de base (20 ; 120) et où ensuite l'unité de soudage et/ou le corps de base (20 ; 120), en vue du soudage, sont déplacés de façon que la feuille (10 ; 110) est en liaison sur un côté avec la face de liaison prévue (22 ; 122) du corps de base (20 ; 120) et sur son autre côté avec l'unité de soudage, où la feuille (10 ; 110) est soudée à la face de liaison prévue (22 ; 122) du corps de base (20 ; 120), **caractérisé en ce qu'**avant la mise en place de la feuille (10 ; 110) entre l'unité de soudage et le corps de base, dans le but du formage préalable du corps de base (20 ; 120), la forme de l'unité de soudage est insérée par fusion dans la face de liaison de celui-ci.

2. Procédé selon la revendication 1, **caractérisé en ce que** l'unité de soudage (30 ; 40 ; 130 ; 140) et le corps de base (20 ; 120), lors du formage préalable du corps de base (20 ; 120) sont déplacés l'un relativement à l'autre de façon que l'unité de soudage pénètre dans la face de liaison prévue (22 ; 122) du corps de base (20 ; 120), où la déviation de l'unité de soudage, lors du formage préalable du corps de base (20 ; 120), dépasse la déviation lors du soudage de la feuille (10 ; 110) d'une valeur qui correspond approximativement à l'épaisseur de la feuille (10 ; 110).

3. Procédé selon l'une des revendications précédentes, **caractérisé en ce que** l'unité de soudage est chauffée selon un procédé à impulsions thermique.

4. Procédé selon l'une des revendications précédentes, où deux feuilles (110) sont soudées au corps de base (120) depuis des côtés opposés de telle sorte que le corps de base est soudé entre les feuilles.

5. Procédé selon la revendication précédente, où le corps de base (120) est placé entre deux unités de soudage opposées (130, 140), les deux feuilles (110) sont placées respectivement entre le corps de base et l'une des unités de soudage, et ensuite les deux unités de soudage sont rapprochées de telle sorte que les deux feuilles (110) sont en liaison respectivement sur un côté avec l'une des unités de soudage et avec leur autre côté respectif avec la face de liaison prévue (122) du corps de base (120), où les feuilles sont soudées à la face de liaison du corps de base.

6. Procédé selon l'une des deux revendications précédentes, où lors du formage préalable du corps de base (120), la forme des deux unités de soudage est empreinte, notamment par fusion dans celui-ci depuis des côtés opposés, où de préférence les deux unités de soudage (130, 140) sont rapprochées de façon que les unités de soudage pénètrent depuis des côtés opposés du corps de base dans la face de liaison (122) de celui-ci.

7. Procédé selon l'une des revendications précédentes, où est insérée par soudage comme corps de base une pièce d'insertion (120), notamment un tuyau, entre deux feuilles (110) d'un sac en feuille médical.

8. Dispositif pour le soudage d'une feuille (10 ; 110) avec un corps de base (20 ; 120) avec au moins une unité de soudage (130 ; 140) et un support pour le corps de base (20 ; 120) où l'unité de soudage et/ou le support sont déplaçables de telle sorte que la feuille (10 ; 110) est en liaison sur un côté avec la face de liaison prévue (122 ; 22) du corps de base (20 ; 120) et sur son autre côté avec l'unité de soudage, où la feuille (10 ; 110) est soudée à la face de liaison prévue (22 ; 122) du corps de base (20 ; 120), **caractérisé en ce qu'**une unité de commande est prévue par laquelle le déplacement d'au moins une unité de soudage et/ou du corps de base (20 ; 120) est commandé de façon qu'avant le soudage de la feuille (10 ; 110), dans le but du formage préalable du corps de base, la forme de l'unité de soudage est empreinte par fusion dans la face de liaison prévue (22 ; 122) du corps de base (20 ; 120).

9. Dispositif selon la revendication 8, **caractérisé en ce que** l'unité de commande est réalisée de facon que l'unité de soudage, lors du formage préalable, pénètre dans le corps de base (20 ; 120) et est déviée d'une valeur qui dépasse la déviation lors de l'opération de soudage selon approximativement l'épaisseur de la feuille (10 ; 110).

10. Dispositif selon l'une des revendications précédentes, **caractérisé en ce qu'**une unité d'entrée est prévue qui est en liaison avec l'unité de commande et dans laquelle peut être entrée l'épaisseur de la feuille (10 ; 110).

11. Dispositif selon l'une des revendications précédentes, **caractérisé en ce que** l'unité de soudage présente un fil d'apport (30 ; 130).

12. Dispositif selon la revendication 11, **caractérisé en ce que** le fil d'apport (30 ; 130) est reçu partiellement dans un boîtier (40 ; 140), où est prévu entre le fil d'apport (30 ; 130) et le boîtier (40 ; 140) une enveloppe en Téflon (32 ; 132).

13. Dispositif selon la revendication 11 ou 12, **caractérisé en ce que** le fil d'apport (30 ; 130) est recouvert au moins partiellement d'une feuille en Kapton (34 ; 134).

14. Dispositif selon l'une des revendications précédentes, où une paire d'unités de soudage (130 ; 140), notamment chacune en forme de demi-coque sont disposées en regard et sont logées de façon à pouvoir être rapprochées et écartées l'une de l'autre, et l'installation de commande est réalisée de façon que les deux unités de soudage (130 ; 140) soient rapprochées lors du formage préalable du corps de base (120) et pénètrent depuis des côtés opposés dans le corps de base.

15. Dispositif selon l'une des revendications précédentes, où sont prévues une unité de soudage préalable et une unité de soudage principale, réalisées d'une manière identique et où l'installation de commande est réalisée de façon que pour le formage préalable du corps de base (20 ; 120), l'unité de soudage préalable et le support sont rapprochés de façon que l'unité de soudage préalable pénètre dans la face de liaison prévue (22 ; 122) du corps de base (20 ; 120) et que pour le soudage, l'unité de soudage principale et le support sont rapprochés de façon que la feuille (10 ; 110) est en liaison sur un côté avec la face de liaison prévue (22, 122) du corps de base (20 ; 120) et sur son autre côté avec l'unité de soudage principale, où la feuille (10 ; 110) est soudée à la face de liaison prévue (22 ; 122) du corps de base.

16. Dispositif selon les deux revendications précédentes, où sont prévues une paire d'unités de soudage préalables et une paire d'unités de soudage principales.
